# EUROPEAN PATENT APPLICATION

(11) **EP 4 496 386 A1**
(43) Date of publication of application: **22.01.2025**
(21) Application number: 23771098.3
(22) Date of filing: 15.03.2023
(51) Int. Cl.: H04W 52/02, H04W 48/18

(54) **METHOD AND APPARATUS FOR OPERATION OF USER EQUIPMENT IN WIRELESS COMMUNICATION SYSTEM**

(30) Priority: 16.03.2022 KR 20220032869
(71) Applicant: LG Electronics Inc., Yeongdeungpo-gu Seoul 07336 (KR)
(72) Inventor: CHOE, Hyunjung, Seoul 06772 (KR)
(74) Representative: Frenkel, Matthias Alexander
(86) International application number: PCT/KR2023/003484
(87) International publication number: WO 2023/177219

(57) **Abstract**

The present disclosure relates to a method for operating a terminal in a wireless communication system and the method includes receiving, by the terminal, network energy saving (NES) configuration information based on an NES operation and performing the NES operation based on the NES configuration information, wherein the NES configuration information includes at least one of NES barring-related information and NES cell barring information, and based on the NES cell barring information indicating a first value, the terminal does not camp on an NES cell based on the NES operation.

## Description

### Technical Field

The present disclosure relates to a wireless communication system, and more particularly, to a method for operating a terminal. Specifically, the present disclosure relates to a method for performing a network energy saving (NES) operation by determining whether or not to perform the NES operation.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide a device and apparatus for operating a terminal in a wireless communication system.

The present disclosure may provide a method and apparatus for performing, by a terminal, terminal reporting by receiving terminal report configuration information for network energy saving in a wireless communication system.

The present disclosure may provide a method and apparatus for determining, by a network, whether or not a network energy saving operation is performed based on terminal report information and indicating to a terminal in a wireless communication system.

The present disclosure may provide a method and apparatus for performing a network energy saving operation by a terminal in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for operating a terminal in a wireless communication system may include receiving, by the terminal, a terminal report configuration for activating a network energy saving (NES) operation, reporting terminal-related information based on the terminal report configuration to a network, based on the NES operation being activated, receiving NES configuration information based on the NES operation, and performing the NES operation based on the NES configuration information.

In addition, as an example of the present disclosure, a terminal in a wireless communication system may include at least one transceiver, at least one processor and at least one memory operably coupled with the at least one processor and storing instructions that instruct, when executed, the at least one processor to perform a specific operation, and the specific operation may control the at least one transceiver to enable the terminal to receive a terminal report configuration for activating a network energy saving (NES) operation, control the at least one transceiver to report terminal-related information based on the terminal report configuration to a network, based on the NES operation being activated, control the at least one transceiver to receive NES configuration information based on the NES operation, and perform the NES operation based on the NES configuration information.

In addition, as an example of the present disclosure, a node in a wireless communication system may include transmitting a terminal report configuration for activating a network energy saving (NES) operation to a terminal, receiving terminal-related information based on the terminal report configuration from the terminal, determining whether or not the NES operation is activated based on the terminal-related information, and based on the NES operation being activated, transmitting NES configuration information based on the NES operation to the terminal.

In addition, as an example of the present disclosure, a node operating in a wireless communication system may include at least one transceiver, at least one processor and at least one memory operably coupled with the at least one processor and storing instructions that instruct, when executed, the at least one processor to perform a specific operation, and the specific operation may control the at least one transceiver to transmit a terminal report configuration for activating a network energy saving (NES) operation to a terminal, control the at least one transceiver to receive terminal-related information based on the terminal report configuration from the terminal, determine whether or not the NES operation is activated based on the terminal-related information, and based on the NES operation being activated, control the at least one transceiver to transmit NES configuration information based on the NES operation to the terminal.

In addition, as an example of the present disclosure, a device including at least one memory and at least one processor functionally coupled with the at least one memory, and the at least one processor may control the device to receive a terminal report configuration for activating a network energy saving (NES) operation, to report terminal-related information based on the terminal report configuration to a network, based on the NES operation being activated, to receive NES configuration information based on the NES operation, and to perform the NES operation based on the NES configuration information.

In addition, as an example of the present disclosure, a non-transitory computer-readable medium storing at least one instruction, including the at least one instruction that is executable by a processor, and the at least one instruction may control a device to receive a terminal report configuration for activating a network energy saving (NES) operation, to report terminal-related information based on the terminal report configuration to a network, based on the NES operation being activated, to receive NES configuration information based on the NES operation, and to perform the NES operation based on the NES configuration information.

In addition, the following may commonly apply.

As an example of the present disclosure, a terminal may perform measurement for at least one or more cells based on a terminal report configuration and report the terminal-related information including measurement information to a network, and the network may determine whether or not to activate an NES operation based on the measurement information.

In addition, as an example of the present disclosure, a terminal may store terminal information based on a terminal report configuration and report the terminal-related information including the terminal information to a network, and the network may determine whether or not to activate an NES operation based on measurement information.

In addition, as an example of the present disclosure, terminal information may include at least one of terminal location information, moving speed information and service priority information, and terminal-related information may be reported to a network based on a terminal assistance information reporting procedure.

In addition, as an example of the present disclosure, a terminal may perform cell reselection based on a cell reselection parameter that is applied to the terminal for an NES operation according to NES configuration information.

In addition, as an example of the present disclosure, a terminal may be any one of an idle mode terminal or an inactive mode terminal.

In addition, as an example of the present disclosure, NES configuration information may be transmitted to a terminal through any one of a broadcast message, a short message, or a paging message.

In addition, as an example of the present disclosure, NES configuration information may include at least any one of access control information based on an NES operation and mobility information based on the NES operation, and the NES operation may be performed based on the NES configuration information.

In addition, as an example of the present disclosure, access control information based on an NES operation may include cell information that does not permit access for the NES operation, and a terminal may not perform access to a cell that does not permit access.

In addition, as an example of the present disclosure, based on a terminal receiving access control information based on an NES operation, the terminal may also receive information on a time where access to a cell is not permitted based on the access control information.

In addition, as an example of the present disclosure, a terminal may perform cell reselection for an NES operation based on mobility information based on the NES operation.

In addition, as an example of the present disclosure, NES configuration information may include 1-bit information indicating whether or not to activate an NES operation, and based on the 1-bit information indicating activation of the NES operation, a terminal may perform the NES operation based on NES information that is preconfigured in the terminal.

In addition, as an example of the present disclosure, a lower layer of a terminal may transfer received NES configuration information to an upper layer of the terminal, and the upper layer may not transfer data to the lower layer until the terminal moves to a new cell.

### Advantageous Effects

The present disclosure may provide a method for operating a terminal in a wireless communication system.

The present disclosure may provide a method for performing, by a terminal, terminal reporting by receiving terminal report configuration information for network energy saving in a wireless communication system.

The present disclosure may provide a method for determining, by a network, whether or not a network energy saving operation is performed based on terminal report information and indicating to a terminal in a wireless communication system.

The present disclosure may provide a method for performing a network energy saving operation by a terminal in a wireless communication system.

The present disclosure may determine a network energy saving operation based on information provided by a terminal and thus reduce a service impact of the terminal in a wireless communication system.

The present disclosure may reduce energy consumption of a network by performing an NES-specific operation in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 illustrates an example communication system applicable to the present disclosure.
FIG. 2 is a view showing an example of a wireless device applicable to the present disclosure.
FIG. 3 is a view showing another example of a wireless device applicable to the present disclosure.
FIG. 4 is a view showing an example of a hand-held device applicable to the present disclosure.
FIGS. 5A and 5B illustrate radio protocol architectures according to an embodiment of the present disclosure.
FIG. 6 illustrates the structure of a radio frame of NR according to an embodiment of the present disclosure.
FIG. 7 illustrates a slot structure of an NR frame according to an embodiment of the present disclosure.
FIG. 8 is a view showing a method for performing an NES operation that is applicable to the present disclosure.
FIG. 9 is a flowchart showing a method for operating a terminal that is applicable to the present disclosure.
FIG. 10 is a flowchart showing a method for operating a network that is applicable to the present disclosure.
FIG. 11 is a flowchart showing a method for operating a terminal that is applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NRj6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

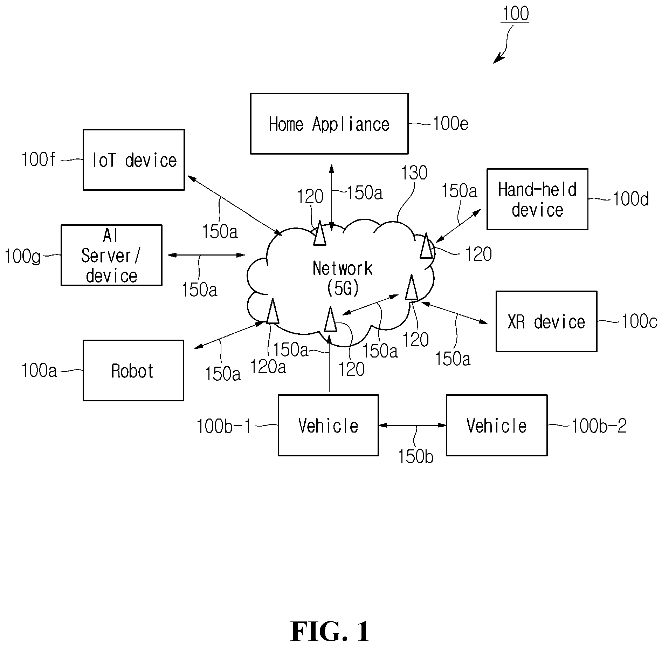

FIG. 1 illustrates an example communication system applicable to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

### Communication system applicable to the present disclosure

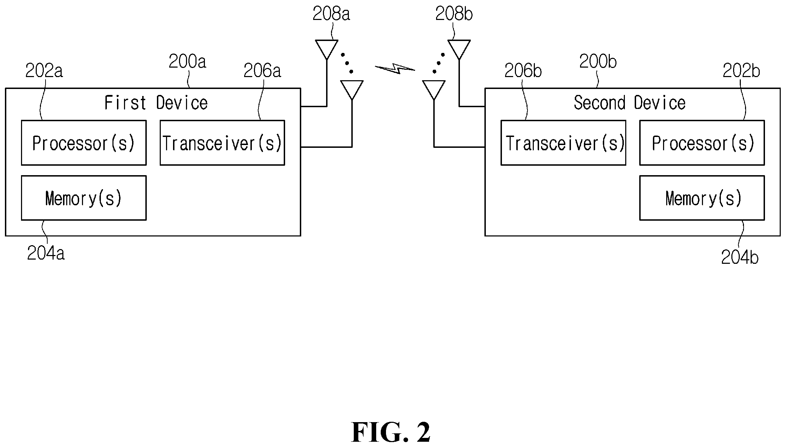

FIG. 2 is a view showing an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be coupled with the processor 202a and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be coupled with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be coupled with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be coupled with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be coupled with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be coupled with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be coupled with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be coupled with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

### Structure of wireless device applicable to the present disclosure

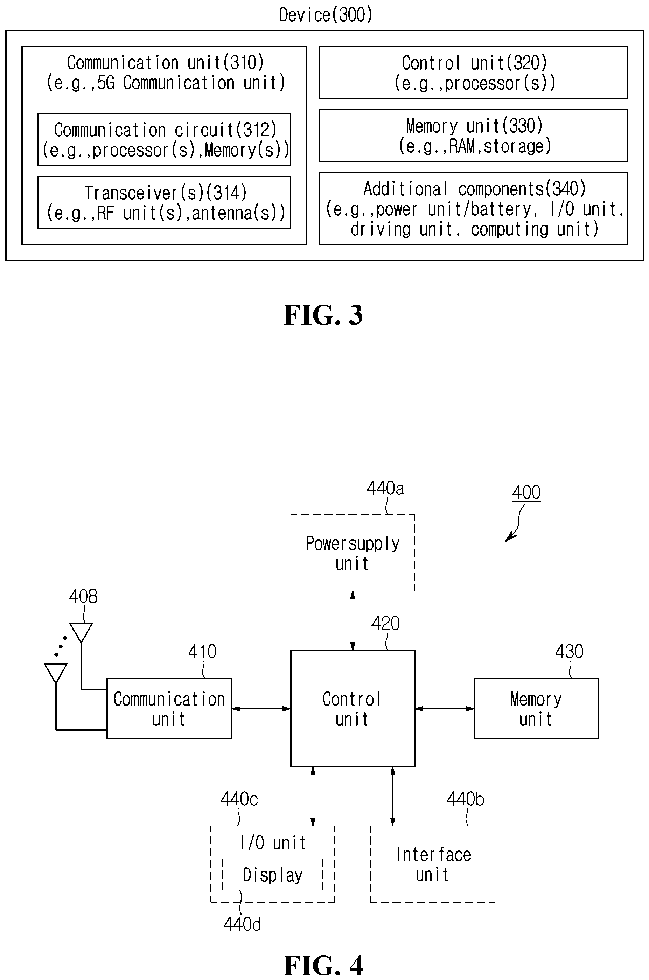

FIG. 3 is a view showing another example of a wireless device applicable to the present disclosure.

Referring to FIG. 3, a wireless device 300 may correspond to the wireless devices 200a and 200b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202a and 202b and/or one or more memories 204a and 204b of FIG. 2. For example, the transceiver(s) 314 may include one or more transceivers 206a and 206b and/or one or more antennas 208a and 208b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

### Hand-held device applicable to the present disclosure

FIG. 4 is a view showing an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440a, an interface unit (interface) 440b, and an input/output unit 440c. An antenna unit (antenna) 408 may be part of the communication unit 410. The blocks 410 to 430/440a to 440c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440a may supply power to the hand-held device 400 and include a wired/wireless charging circuit, a battery, etc. The interface unit 440b may support connection between the hand-held device 400 and another external device. The interface unit 440b may include various ports (e.g., an audio input/output port and a video input/output port) for connection with the external device. The input/output unit 440c may receive or output video information/signals, audio information/signals, data and/or user input information. The input/output unit 440c may include a camera, a microphone, a user input unit, a display 440d, a speaker and/or a haptic module.

For example, in case of data communication, the input/output unit 440c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440c in various forms (e.g., text, voice, image, video and haptic).

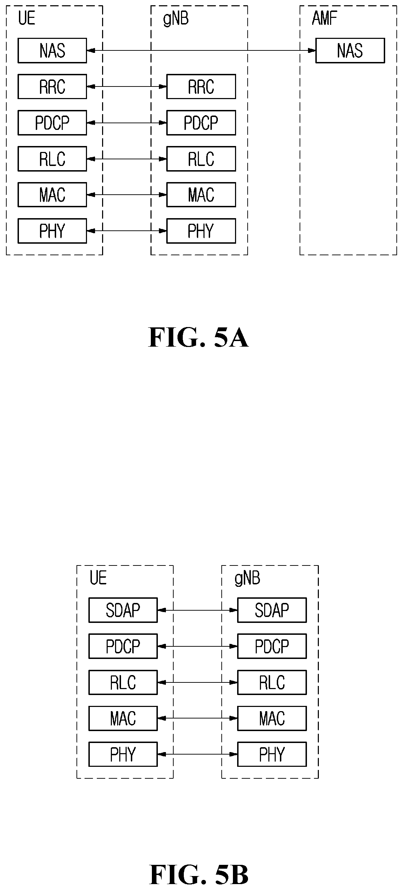

FIGS. 5A and 5B illustrate protocol architectures according to an embodiment of the present disclosure. The embodiment of FIG. 5A and 5B may be combined with various embodiments of the present disclosure. Specifically, FIG. 5A shows a radio protocol structure for a user plane and FIG. 5B shows a radio protocol structure for a control plane. The user plane is a protocol stack for user data transmission and the control plane is a protocol stack for control signal transmission.

Referring to FIGS. 5A and 5B, a physical layer provides an information transfer service to a higher layer using a physical channel. The physical layer is connected to a Medium Access Control (MAC) layer located on a higher layer via a transport channel. Data is transported between the MAC layer and the physical layer via the transport channel. The transport channel is classified according to how data is transmitted via a radio interface with what characteristics.

Data is also transported between different physical layers, that is, the physical layers of a transmitter and a receiver, via a physical channel. The physical channel may be modulated using an Orthogonal Frequency Division Multiple Access (OFDMA) scheme and uses a time and a frequency as radio resources.

A Medium Access Control (MAC) layer provides a service to a Radio Link Control (RLC) layer of a higher layer via a logical channel. The MAC layer provides a mapping function from a plurality of logical channel to a plurality of transport channels. In addition, the MAC layer provides a logical channel multiplexing function by mapping from a plurality of logical channels to a single transport channel. A MAC sublayer provides a data transmission service on a logical channel.

A radio link control (RLC) layer performs concatenation, segmentation and reassembly of an RLC service data unit (SDU). In order to ensure a variety of quality of service (QoS) required by a radio bearer (RB), the RLC layer provides three operation modes such as a transparent mode (TM), an unacknowledged mode (UM) and an acknowledged mode (AM). AM RLC provides error correction through automatic repeat request (ARQ).

A Radio Resource Control (RRC) layer is defined only in the control plane. The RRC layer is responsible for control of logical, transport, and physical channels in association with configuration, re-configuration, and release of Radio Bearers (RBs). The RB means a logical path provided by Layer 1 (the physical layer or the PHY layer) and Layer 2 (the MAC layer, the RLC layer or the packet data convergence protocol (PDCP) layer) for data transfer between a UE and a network.

The functions of the PDCP layer in the user plane include user data transfer, header compression and ciphering. The functions of the PDCP layer in the control plane include control plane data transfer and ciphering/integrity protection.

A service data adaptation protocol (SDAP) layer is defined only in the user plane. The SDAP layer performs mapping between QoS flow and data radio bearer and QoS flow identifier (ID) marking in uplink and downlink packets.

Configuring a RB means a process of defining characteristics of a radio protocol layer and channel to provide a specific service and setting specific parameters and operation methods. The RB may be subdivided into a signaling radio bearer (SRB) and a data radio bearer (DRB). The SRB is used as a path for transmitting an RRC message in the control plane and the DRB is used as a path for transmitting user data in the user plane.

When RRC connection is established between the RRC layer of a terminal and the RRC layer of the base station, the UE may be in a RRC_CONNECTED mode, and, otherwise, the UE may be in a RRC_IDLE mode. In the case of NR, a RRC_INACTIVE state is further defined, and the UE in the RRC_INACTIVE mode may maintain connection with the core network but release connection with the base station.

Examples of a downlink transmission channel for transmitting data from a network to a terminal include a broadcast channel (BCH) for transmitting system information and a downlink shared channel (SCH) for transmitting user traffic or a control message. A control message or traffic of a downlink multicast or broadcast service may be transmitted via a downlink SCH or via a separate downlink multicast channel (MCH). Meanwhile, examples of an uplink transmission channel for transmitting data from a terminal to a network include a random access channel (RACH) for transmitting an initial control message and an uplink shared channel (SCH) for transmitting user traffic or a control message.

Examples of a logical channel located above a transport channel and mapped to the transport channel include a Broadcast Control Channel (BCCH), a Paging Control Channel (PCCH), a Common Control Channel (CCCH), a Multicast Control Channel (MCCH), a Multicast Traffic Channel (MTCH) and the like.

The physical channel consists of a plurality of OFDM symbols in the time domain and a plurality of subcarriers in the frequency domain. One subframe consists of a plurality of OFDM symbols in the time domain. The resource block is a resource allocation unit and consists of a plurality of OFDM symbols and a plurality of subcarriers. In addition, each subframe may use specific subcarriers of specific OFDM symbols (e.g., a first OFDM symbol) of the corresponding subframe for a physical downlink control channel (PDCCH), that is, an L1/L2 control channel. A Transmission Time Interval (TTI) is a unit time for subframe transmission.

### Radio resource structure

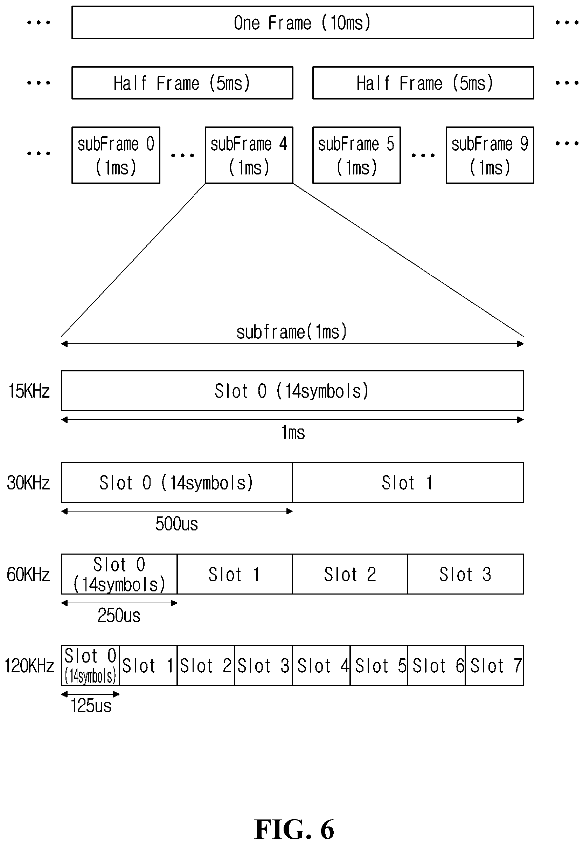

FIG. 6 illustrates the structure of a radio frame of NR according to an embodiment of the present disclosure. The embodiment of FIG. 6 may be combined with various embodiments of the present disclosure.

Referring to FIG. 6, in NR, a radio frame may be used in uplink and downlink transmission. A radio frame has a length of 10 ms and may be defined as two 5-ms half-frames (HFs). The half-frame includes five 1-ms subframes (SFs). The subframe may be divided into one or more slots and the number of slots in the subframe may be determined according to a subscriber spacing (SCS). Each slot may include 12 or 14 OFDM(A) symbols according to a cyclic prefix (CP).

When a normal CP is used, each slot may include 14 symbols. When an extended CP is used, each slot may include 12 symbols. Here, the symbol may include an OFDM symbol (or a CP-OFDM symbol) and an SC-FDMA (Single Carrier - FDMA) symbol (or a DFT-s-OFDM (Discrete Fourier Transform-spread-OFDM) symbol).

When the normal CP is used, the number N^{slot}_{symb} of symbols per slot, the number N^{frame,u}ₛₗₒₜ of slots per frame and the number N^{subframe,u}ₛₗₒₜ of slots per subframe may vary according to the SCS configuration (u). For example, SCS(=15*2^{µ}), N^{slot}_{symb}, N^{frame,µ}ₛₗₒₜ, and N^{subframe,µ}slot may be 15 KHz, 14, 10 and 1 in the case of u=0, may be 30 KHz, 14, 20 and 2 in the case of u=1, may be 60 KHz, 14, 40, 4 in the case of u=2, may be 120 KHz, 14, 80 and 8 in the case of u=3, and may be 240 KHz, 14, 160, 16 in the case of u=4. In contrast, when the extended CP is used, SCS(=15*2^{µ}), N^{slot}_{symb}, N^{frame,µ}slot, and N^{subframe,µ}ₛₗₒₜ may be 60 KHz, 12, 40 and 4 in the case of u=2. In the NR system, an OFDM(A) numerology (e.g., SCS, CP length, etc.) may be differently set among a plurality of cells merged into one terminal. Accordingly, the (absolute time) duration of time resources (e.g., a subframe, a slot or a TTI) (for convenience, collectively referred to as a time unit (TU)) consisting of the same number of symbols may be differently set between merged cells.

In NR, a plurality of numerologies or SCS supporting various 5G services may be supported. For example, a wide area in typical cellular bands may be supported when SCS is 15 kHz, and dense-urban, lower latency and wider carrier bandwidth may be supported when SCS is 30 kHz/60kHz. When SCS is 60 kHz or higher, bandwidth greater than 24.25 GHz may be supported in order to overcome phase noise.

The NR frequency band may be defined as two types of frequency ranges. The two types of frequency ranges may be FR1 and FR2. The numerical value of the frequency range may be changed and, for example, frequency ranges corresponding to FR1 and FR2 may be 450 MHz to 6000 MHz and 24250 MHz to 52600 MHz. In addition, the supported SCS may be 15, 30 and 60 kHz in the case of FR1, and may be 60, 120 and 240 kHz in the case of FR2. Among the frequency ranges used in the NR system, FR1 may mean "sub 6 GHz range", and FR2 may mean "above 6 GHz range" and may be called as millimeter wave (mmW).

As described above, the numerical value of the frequency range of the NR system may be changed. For example, as compared to the above-described example of the frequency range, FR1 may be defined as including a band of 410 MHz to 7125 MHz. That is, FR1 may include a frequency band of 6 GHz (or 5850, 5900, 5925 MHz, etc.) or higher. For example, a frequency band of 6 GHz (or 5850, 5900, 5925 MHz, etc.) included in FR1 may include an unlicensed band. The unlicensed band may be used for various purposes and may be used, for example, for vehicle communication (e.g., autonomous driving).

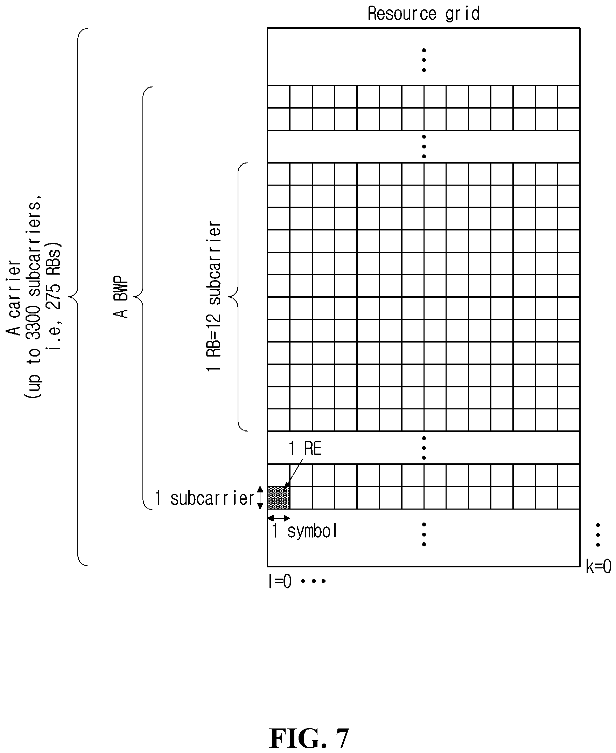

FIG. 7 illustrates a slot structure of an NR frame according to an embodiment of the present disclosure. The embodiment of FIG. 7 may be combined with various embodiments of the present disclosure.

Referring to FIG. 7, a slot includes a plurality of symbols in the time domain. For example, one slot includes 14 symbols in the case of the normal CP and may include 12 symbols in the case of the extended CP. Alternatively, one slot may include 7 symbols in the case of the normal CP and may include 6 symbols in the case of the extended CP.

A carrier includes a plurality of subcarriers in the frequency domain. A resource block (RB) may be defined as a plurality (e.g., 12) of consecutive subcarriers in the frequency domain. A bandwidth part (BWP) may be defined as a plurality of consecutive (physical) resource blocks ((P)RBs) in the frequency domain, and correspond to one numerology (e.g., SCS, CP length, etc.). The carrier may include a maximum of N (e.g., 5) BWPs. Data communication may be performed through an activated BWP. Each element may be referred to as a resource element (RE) in the resource grid and one complex symbol may be mapped.

Meanwhile, a radio interface between terminals and a radio interface between a terminal and a network may consist of Layer L1, Layer L2 and Layer L3. In various embodiments of the present disclosure, Layer L1 may mean a physical layer. In addition, for example, Layer L2 may mean at least one of a MAC layer, an RLC layer, a PDCP layer or an SDAP layer. In addition, for example, Layer L3 may mean an RRC layer.

As an example, if a plurality of terminals accesses a single cell, overload may occur to the cell and a network. In consideration of what is described above, an access control operation for controlling access of terminals may be performed. For access control, a cell reservations and access restrictions operation may be performed based on a broadcast message. As another example, an access barring operation may be performed based on unified access control (UAC).

As a concrete example, a master information block (MIB) and a system information block (SIB), which are broadcast messages, may include a flag value for controlling cell reservation and access, and based on this, a cell selection and reselection procedure may be performed. In case a terminal performs the cell selection and reselection procedure, the terminal is incapable of accessing a cell on which access is restricted. As an example, an information element of the MIB may include cell barring information indicating whether or not access to a cell is restricted. Herein, the cell barring information may be "cellBarred", and a corresponding value may indicate "barred" or "notBarred". Because a corresponding flag is included in the MIB, even if an SIB 1 is not received and decoded, it may be known whether or not access to a corresponding cell is restricted. As an example, in case the cell is barred, a terminal may select another cell, not being able to access the cell in a process of selecting or reselecting the cell.

Herein, as an example, in case the MIB indicates cell barring, the terminal may identify an intra-frequency selection parameter within the MIB. In case the parameter indicates permission, the terminal may select another cell in a same frequency. As another example, in case the terminal fails to decode the SIB 1, the terminal may determine that a corresponding cell is barred. The terminal may determine whether or not to select another cell in the same frequency based on the intra-frequency selection parameter within the MIB, but is not limited the above-described embodiment. In addition, as an example, when the cell is barred, the terminal may determine that the cell is inaccessible for a predetermined time period.

In addition, as an example, the SIB 1 may include a parameter about cell access-related information (cellAccessRelatedInfo). Herein, based on the parameter about the cell access-related information, it is possible to obtain information on a cell that is accessible from a corresponding network, and the cell may be accessed based on it. In addition, as an example, the SIB 1 may include a parameter indicating whether or not a cell is occupied by an operator (cellReservedForOperatorUse) and a parameter indicating whether not the cell is occupied by other use (cellReservedForOtherUs), and based on the cell, a terminal may check whether or not access to the cell is barred.

As a concrete example, according to unified access control, an AS may perform a barring check to determine whether or not a service request is permitted according to barring configuration information based on an access identifier and an access category that are mapped by an NAS. A terminal may receive system information including access control configuration information and store the configuration information, and this is the same as described above. Barring configuration information may be provided according to each access category in each PLMN. Specifically, whether or not access is prohibited may be determined based on a PLMN ID and access category indication information, and when access is prohibited, an AS of the terminal may prohibit access for a preset time by operating a timer with a preset value.

In case access is prohibited, the AS of the terminal may notify the NAS of the terminal about whether or not access is prohibited. Then, when the predetermined time arrived, the AS of the terminal may request access to the NAS of the terminal again, and the NAS of the terminal may request access to the AS of the terminal again. On the other hand, in case access is permitted, the AS of the terminal may establish RRC connection or transmit data for the RRC connection.

As described above, a terminal may perform cell selection and reselection by considering barring configuration information. As an example, a terminal may search for and select a suitable cell in a selected network, be provided with an available service, and monitor control information. That is, the terminal may camp on the cell. Then, in case the terminal discovers a more suitable cell, the terminal may reselect a cell based on a cell reselection criterion. As an example, when the terminal reselects a cell, a frequency priority order may be configured in the terminal. The frequency priority order may be configured based on a designated message or a broadcast message but is not limited to a specific embodiment. Then, the terminal may perform measurement based on the frequency priority order and reselect an optimal cell based on the measurement. However, the terminal may check whether or not the cell is restricted or bars access and reselect the cell only when access is possible, thereby completing a reselection procedure.

As another example, a terminal may perform discontinuous reception (DRX) in a RRC idle state (RRC_IDLE) and a RRC inactive state (RRC_INACTIVE) in order to reduce power consumption. The terminal may monitor one paging occasion (PO) at each DRX period. The period may receive paging downlink control information (DCI) on a paging occasion (PO) that is a PDCCH monitoring occasion that may be configured in a multi-time slot (e.g., subframe or OFDM symbol).

In addition, as an example, in NR, a base station may perform multiple beam transmissions. The base station may repeatedly transmit a same paging message in every beam of an overall pattern. The terminal may receive the paging message by selecting a specific beam among beams transmitted by the base station, and an operation of the terminal for this may be different according to terminal implementations.

In addition, as an example, paging messages may be distinguished into radio access network (RAN) paging and core network (CN) paging. However, a RAN paging message and a CN paging message may be an identical paging message. More specifically, a terminal of the RRC idle state and a terminal of the RRC inactive state, which are described above, may differently operate. As an example, the terminal of the RRC inactive state may be in a state of being connected to a CN and be in an inactive state in a RAN. Accordingly, the CN may determine that the terminal is connected to a specific RAN. Herein, if signaling occurs to the terminal, the CN may consider the terminal to be in a connected state and transfer signaling for the terminal to the RAN. Herein, because the terminal of the RRC inactive state is in an inactive state in the RAN, the RAN may generate a paging message and thus perform the above-described RAN paging.

On the other hand, the terminal of the RRC idle state may be in an inactive state both in a RAN and in a CN. Accordingly, if signaling occurs to the terminal, the CN may perform the above-described CN paging based on a tracking area (TA).

Herein, as an example, if the terminal of the RRC inactive state receives RAN paging, the terminal may perform a RRC connection resume procedure. On the other hand, if the terminal of the RRC inactive state receives CN paging, the terminal makes a transition from the RRC inactive state to the RRC idle state and provides information on the transition state to the CN.

In addition, as an example, when a terminal receives a paging message, the terminal may identify DCI scrambled with a P-radio network temporary identifier (P-RNTI) in a discontinuous PDCCH based on DRX and operate based on the DCI. Herein, a frame, where the terminal monitors the PDCCH, may be the above-described paging frame (PF), and a PDCCH monitoring occasion may be a paging occasion (PO), which is the same as described above.

As another example, terminal (UE) assistance information may be a specific RRC message through which a terminal reports various information of the terminal to a network. The network may efficiently perform resource allocation and control based on the terminal assistance information received from the terminal. Specifically, the terminal may establish a RRC connection to the network and report the terminal assistance information to the network. As an example, the terminal assistance information may be terminal capability information. In addition, as an example, the terminal assistance information may include information related to power saving or measurement and other information but may not be limited to a specific form.

In addition, as an example, a terminal may report sidelink terminal (UE) information to a network. The sidelink terminal information may be information on a terminal that performs sidelink communication. As an example, the sidelink terminal information may include frequency information for transmitting/receiving a sidelink, capability information, cast type information, destination ID information, QoS-related information and other information and is not limited to a specific embodiment.

As another example, minimization of driving tests (MDT) may mean that service providers perform tests using terminals to achieve overage optimization. Coverage may be different according to a location of a base station, arrangement of neighbor buildings and a usage environment of a user. A service provider needs to perform a driving test periodically, but a lot of cost and resources may be required. Herein, MDT may be measurement of coverage by a service provider using a terminal. More specifically, MDT may be divided into logged MDT and immediate MDT. The logged MDT may be an operation of transferring logged measurement to a network at a specific time after a terminal performs MDT measurement. On the other hand, the immediate MDT may be an operation of transferring measurement when a reporting condition is satisfied after a terminal performs MDT measurement. The logged MDT may perform MDT measurement in a RRC idle mode, while the immediate MDT may perform MDT measurement in a RRC connected mode. As an example, in case the usage of a wireless network drastically increases at a specific time in a wireless communication system, a terminal may measure a wireless environment or terminal performance indicators for a specific time and log and report the measurement.

As an example, in an existing communication system (e.g., LTE), operations for energy saving of a terminal could be defined. A new communication system (e.g., NR) also defines operations for energy saving of a terminal, but an operation for network energy saving (NES) may be needed in consideration of reasons such as the structure and environment of the new communication system. Hereinafter, operations for NES will be described in terms of an operation of a base station.

For NES, a RAN node may deactivate a cell or distribute a traffic load for a specific terminal to another cell. As another example, the RAN node may reduce the number of broadcast messages (e.g., SIB) for NES. Herein, the RAN node needs to determine whether or not to perform the above-described NES operation for network energy saving.

As a concrete example, to determine whether or not to activate the NES operation, the RAN node may obtain terminal (UE) assistance information from terminals. The RAN node may determine whether or to activate the NES operation by using information in the terminal assistance information. Herein, after determining activation of the NES operation, the RAN node needs to control terminals within a cell to ensure service continuity of the terminals. That is, the RAN node first needs to determine whether or not to activate the NES operation. If activation of the NES operation is not needed, the RAN node may operate as before. On the other hand, if activation of the NES operation is needed, a network may control mobility of a terminal or perform an access control operation in order to support NES.

As an example, the NES operation may be considered in a RRC idle mode terminal or a RRC inactive mode terminal rather than in a RRC connected mode terminal, which transmits and receives data from a network, but is not limited thereto. Herein, the RRC idle state terminal may be in a state where both a base station and a network are disconnected, and the RRC inactive terminal may be in a state where a terminal and a base station are not connected but a core network keeps being connected. As an example, as the RRC idle state terminal or the RRC inactive state terminal moves without handover, a current base station may not receive information or feedback on the terminal. Hereinafter, a RRC idle terminal or a RRC inactive terminal will be described in terms of an operation of receiving an NES operation indication from a network and applying a configuration for an NES operation but may not be limited thereto.

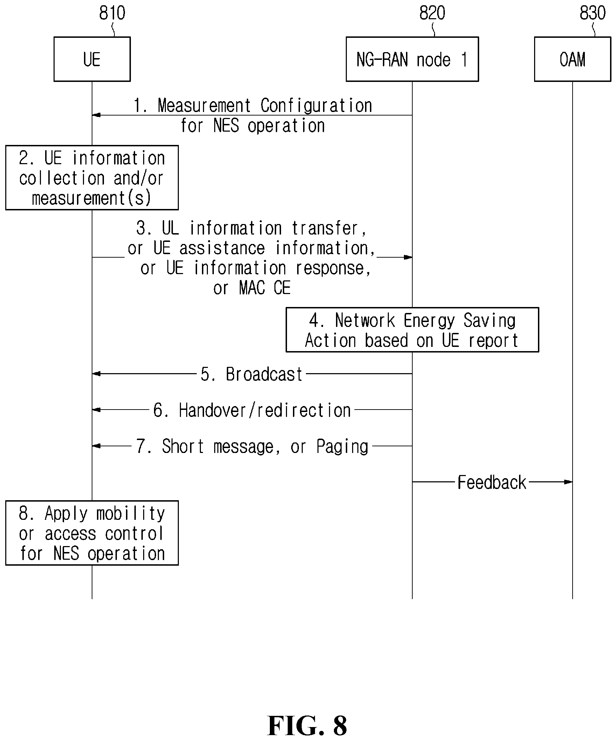

FIG. 8 is a view showing a method for performing an NES operation that is applicable to the present disclosure. Referring to FIG. 8, a terminal 810 may obtain a terminal (UE) report configuration for an NES operation from a RAN node 820 (e.g., NG-RAN node 1) (Step 1). As an example, the terminal report information may be a measurement configuration or minimization of driving test (MDT) configuration for the NES operation but not be limited thereto. Herein, the terminal report configuration may include configuration information for measurement of at least one of a serving cell and a neighbor cell. The configuration information for measurement may be information on measurement of at least one of reference signals received power (RSRP), reference signal received quality (RSRQ) and signal-to-noise ratio (SINR) of a cell.

As another example, a terminal report configuration for NES may be a configuration for receiving terminal information. As an example, the terminal information may include at least any one of location of the terminal (UE location), a moving velocity of the terminal (UE' moving velocity) and a service priority but is not limited thereto.

Herein, the terminal 810 may receive terminal configuration information for the above-described NES operation through designated RRC signaling. The designated RRC signaling may be RRCReconfiguration, LoggedMeasurementconfiguration or other designated RRC signaling and is not limited to a specific signal.

As another example, the terminal 810 may receive NES operation indication information from a RAN node 820 based on a broadcast message and obtain terminal information based on a terminal report configuration, which is preconfigured in the terminal, or a terminal information report configuration. That is, the RAN node 820 may transmit the NES operation indication information alone to the terminal 810 to determine activation of the NES operation, and the terminal 810 may obtain and report terminal information based on a terminal report configuration, which is preconfigured in the terminal, or a terminal information report configuration. As an example, NES operation indication information may be 1-bit information but is not limited thereto.

Next, the terminal 810 may perform an operation for a terminal report. As a concrete example, the terminal 810 may perform at least one operation of measurement and terminal information collection in order to report to a network (Step 2). The terminal 810 may measure at least one of RSRP, RSRQ or SINR for an NES operation. In addition, the terminal 810 may obtain and store at least any one of the above-described information (e.g., a terminal location, a moving velocity, a service priority).

Next, the terminal 810 may transmit at least one of a terminal report and terminal information for NES to the network (Step 3). As an example, the terminal 810 may transmit a measurement report to the network through designated RRC signaling. The designated RRC signaling may be UL information transfer but is not limited thereto. As another example, the terminal 810 may report terminal information to the network through the above-described terminal (UE) assistance information or sidelink UE information as designated signaling but may not be limited thereto. As another example, the terminal 810 may report predicted traffic information to the network. Herein, the predicted traffic information may be reported through MAC or RRC signaling. As a concrete example, the predicted traffic information may be reported through a medium access control (MAC) control element (CE). As another example, the predicted traffic information may be transmitted through terminal assistance information as designated RRC signaling but may not be limited thereto.

As another example, in an MDT procedure, the terminal 810 may report at least any one of a terminal report and terminal information for NES to the network. The terminal 810 may report at least any one of the terminal report and the terminal information to the network through RRC signaling. As an example, the RRC signaling may be a terminal (UE) information response but not be limited thereto. Based on what is described above, for NES, the terminal 810 may transmit at least any one of a terminal measurement report and terminal-related information to the network.

Next, the network may determine whether or not to activate an NES operation, based on information obtained from the terminal 810 (Step 4). As an example, the network may obtain at least any one of the above-described measurement, terminal information and predicted traffic information from the terminal 810 and determine, based on the information, whether or not to activate the NES operation. Herein, if the network does not activate the NES operation, the network may operate in the same manner as before.

On the other hand, if the network activates the NES operation, the network may transmit configuration information for the NES operation (e.g., NES-specific access control or NES-specific idle mobility operation) to the terminal 810. That is, the terminal 810 may receive configuration information for the NES operation from the network.

As an example, the network may indicate through broadcast information that a cell performs an NES activating operation (Step 5). As a concrete example, the network may indicate through a system information block that the cell performs the NES activating operation. That is, information on a cell performing the NES activating operation may be included in the system information block and be indicated to the terminal 810. The terminal 810 may perceive the information on the cell performing the NES operation by receiving the broadcast system information block. As an example, the system information block may include information indicating the NES operation. The terminal 810 may receive information indicating the NES operation and perform the NES operation based on information that is preconfigured in the terminal. As an example, the information indicating the NES operation may be 1-bit information but is not limited thereto. As another example, the system information block may NES configuration information for the NES operation. Based on the NES configuration information, the terminal 810 may perform the NES operation but is not limited to a specific embodiment.

As another example, the RAN node may indicate through designated access stratum (AS) or non-access stratum (NAS) signaling that the cell performs the NES activating operation (Step 6). In addition, the RAN node 820 may broadcast access control information for the NES operation, and thus the terminal may perceive that the cell performs the NES activating operation.

As another example, the RAN node 820 may broadcast NES aware cell selection/reselection parameters through system information. As another example, the RAN node 820 may broadcast the NES aware cell selection/reselection parameters through designated RRC signaling (e.g., RRCrelease). Herein, the terminal 810 may perform an NES operation based on received information. That is, the terminal 810 may perform NES-specific access control or an NES-specific mobility operation. As a concrete example, in case it is indicated that idle mobility is required based on NES, the terminal 810 may perform an idle mobility operation by using NES aware cell selection/reselection parameters. In addition, access of the terminal 810 to a specific cell may be controlled based on activation of an NES operation, and cell reselection may be performed based on a parameter for the NES operation.

As another example, the RAN node 820 may indicate through a short message (e.g., downlink control information (DCI)) or a paging message that a cell performs an NES activating operation (Step 7). That is, information indicating that a cell performs the NES activating operation may be included in DCI, and thus the terminal 810 may perceive that the cell performs the NES activating operation. Alternatively, the information indicating that a cell performs the NES activating operation may be included in a paging message, and thus the terminal 810 may perceive that the cell performs the NES activating operation.

Specifically, when the terminal 810 receives a short message or a paging message including an NES operation indication, the terminal 810 may perform an NES operation based on preconfigured information for the NES operation. As an example, information on the NES operation indication may be 1-bit information but is not limited to a specific embodiment. Herein, the information on the NES operation indication may be indicated based on UE-identity information. As an example, the UE-identity information may be a group identifier, and the group identifier may be a group of terminals that a network wants to move to one or more neighbor cells. That is, the network may indicate whether or not to activate an NES operation to the terminal 810 through UE-identity information on a group of terminals that need to perform NES-specific access control or an NES-specific mobility operation as the NES operation. The terminal 810 may check whether or not the NES operation is activated, based on NES operation indication information and UE-identity information and perform the NES operation.

In case the terminal 810 receives an NES operation indication message, the terminal 810 may transfer corresponding information to an upper layer. As an example, the terminal 810 may transfer an NES operation indication to the upper layer so as not to transfer user data from the upper layer to a lower layer until the terminal 810 moves to a new cell. As another example, the terminal 810 may perform access control through an access identity that is configured for NES operation. As an example, the terminal 810 may not be permitted to access a corresponding cell based on the access identity.

In addition, as an example, a network may broadcast information on a deactivated time period of a cell or a time period where the cell does not permit the terminal 810 to access. Herein, in case a cell state in a public land mobile network (PLMN) for an operator indicates "not barred" and "reversed", the terminal 810, which is configured with an access identity for NES, may operate by determining the cell state as "bared" state if the cell is reserved for operator use.

In case the terminal 810 receives access control information for NES, the terminal 810 may perform access control (Step 8). The terminal 810 may transfer the access control information to an upper layer. The terminal 810 may configure an access identity for NES as an access identity (e.g., 4). In addition, an NAS layer of the terminal 810 may configure an access identity for an NES operation as a RRC layer. When receiving an NES operation message, the RRC layer may automatically configure an access identity for the NES operation.

As another example, the terminal 810 may receive an access identity for an NES operation as access control information through system information. The access control information may include at least any one of a deactivated time period of a cell or a time period where access of the terminal to the cell is not permitted, without being limited thereto, though.

In addition, as an example, in case the terminal 810 receives an NES operation indication, the terminal 810 may apply a pre-configured cell reselection parameter for the NES operation and perform cell reselection.

In addition, as an example, in case the terminal 810 moves to a new cell, the terminal 810 may transfer information on leaving a previous cell to a network. That is, when receiving move indication information from the terminal 810, the network may report cell state information (e.g., NES operation has been activated. UE statistics) to operation administration maintenance (OAM).

Herein, as an example, information, which the network broadcasts for the NES operation, may be described as in Table 1. Referring to Table 1, the broadcast information may include information on a cell that is barred for an NES activating operation and time information that is preconfigured for it. In addition, as an example, information regarding whether or not intra-frequency reselection for NES is permitted may be included. As another example, a barring information set based on unified access control may be included but not be limited to Table 1 below.

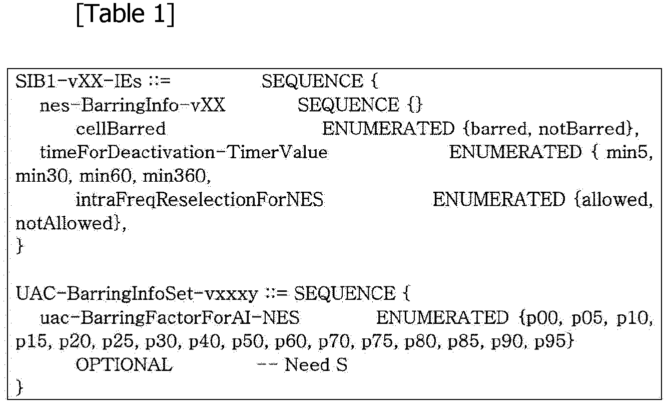

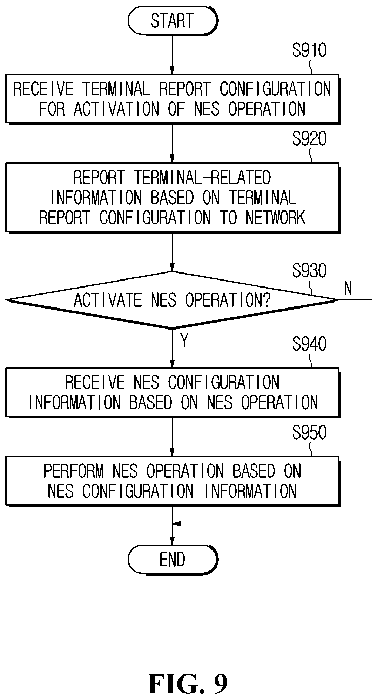

FIG. 9 is a flowchart showing a method for operating a terminal that is applicable to the present disclosure.

Referring to FIG. 9, the terminal may receive a terminal report configuration for activation of an NES operation (S910). Next, the terminal may report terminal-related information based on the terminal report configuration to a network (S920). As an example, the terminal-related information may include at least any one of measurement information, terminal information and predicted traffic information. Next, based on the terminal-related information received from the terminal, the netowrk may determine whether or not to activate the NES operation. In case the network activates the NES operation (S930), the terminal may receive NES configuration information from the network based on the NES operation (S940). The terminal may perform the NES operation based on the NES configuration information (S950). On the other hand, in case the network does not activate the NES operation (S930), the network and the terminal may maintain an existing operation.

As an example, the terminal may perform measurement for at least one cell based on the terminal report configuration and report the terminal-related information including measurement information to the network. The network may determine, based on the measurement information, whether or not to activate the NES operation. As another example, the terminal may store terminal information based on the terminal report configuration and report the terminal-related information including the terminal information to the network. The network may determine, based on the measurement information, whether or not to activate the NES operation. Herein, the terminal information may include at least any one of terminal location information, moving velocity information and service priority information.

In case the terminal receives NES configuration information from the network, the terminal may perform cell reselection based on a cell reselection parameter that is applied to the terminal for the NES operation, according to the NES configuration information. As an example, the terminal may be any one of an idle mode terminal or an inactive mode terminal but not be limited thereto.

In addition, as an example, the NES configuration information may be transmitted to the terminal through any one of a broadcast message, a short message or a paging message. Herein, the NES configuration information may include at least any one of access control information based on the NES operation and mobility information based on the NES operation, and the terminal may perform the NES operation based on the NES configuration information.

Herein, the access control information based on the NES operation may include information on a cell to which access is not permitted for the NES operation, and the terminal may not perform access to the cell to which access is not permitted. In addition, in case the terminal receives the access control information based on the NES operation, the terminal may receive information on a time where access to a cell is not permitted based on the access control information. In addition, the terminal may perform cell reselection for the NES operation according to the mobility information based on the NES operation.

As another example, the NES configuration information may include 1-bit information indicating whether or not to activate the NES operation, and if the 1-bit information indicates activation of the NES operation, the terminal may perform the NES operation based on NES information that is preconfigured in the terminal. In addition, a lower layer of the terminal may transfer the received NES configuration information to an upper layer of the terminal, and the upper layer may not transfer data to the lower layer until the terminal moves to a new cell.

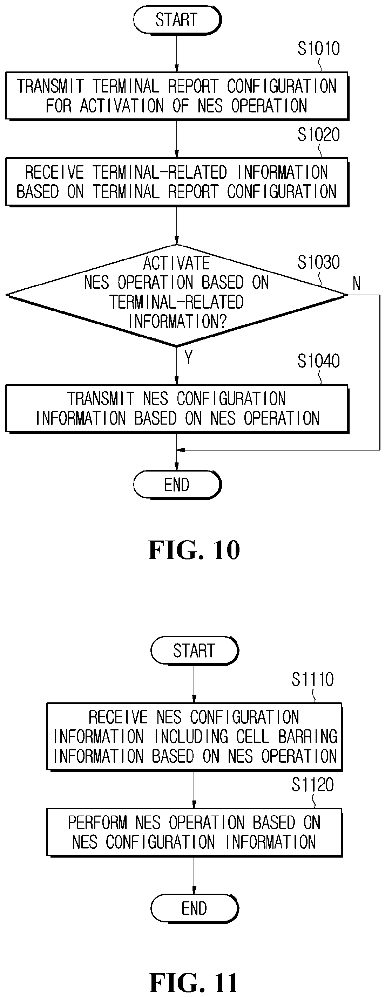

FIG. 10 is a flowchart showing a method for operating a network that is applicable to the present disclosure. Referring to FIG. 10, the network may transmit a terminal report configuration for activation of an NES operation to a terminal (S1010). Next, the network may receive terminal-related information from the terminal based on the terminal report configuration (S1020). The network may determine, based on the terminal-related information, whether or not to activate the NES operation (S1030). Herein, in case the NES operation is activated, the network may transmit NES configuration information based on the NES operation to the terminal. On the other hand, in case the network does not activate the NES operation, the network and the terminal may maintain an existing operation.

As an example, the terminal may perform measurement for at least one or more cells based on the terminal report configuration, include measurement information in the terminal-related information and report to the network. The network may determine, based on the measurement information, whether or not to activate the NES operation. As another example, the terminal may store terminal information based on the terminal report configuration, include the terminal information in the terminal-related information and report to the network. The network may determine, based on the measurement information, whether or not to activate the NES operation. Herein, the terminal information may include at least any one of terminal location information, moving velocity information and service priority information.

In case the terminal receives NES configuration information from the network, the terminal may perform cell reselection based on a cell reselection parameter that is applied to the terminal for the NES operation, according to the NES configuration information. As an example, the terminal may be any one of an idle mode terminal or an inactive mode terminal but not be limited thereto.

In addition, as an example, the NES configuration information may be transmitted to the terminal through any one of a broadcast message, a short message or a paging message. Herein, the NES configuration information may include at least any one of access control information based on the NES operation and mobility information based on the NES operation, and the terminal may perform the NES operation based on the NES configuration information.

Herein, the access control information based on the NES operation may include information on a cell to which access is not permitted for the NES operation, and the terminal may not perform access to the cell to which access is not permitted. In addition, in case the terminal receives the access control information based on the NES operation, the terminal may receive information on a time where access to a cell is not permitted based on the access control information. In addition, the terminal may perform cell reselection for the NES operation according to the mobility information based on the NES operation.

As another example, the NES configuration information may include 1-bit information indicating whether or not to activate the NES operation, and if the 1-bit information indicates activation of the NES operation, the terminal may perform the NES operation based on NES information that is preconfigured in the terminal. In addition, a lower layer of the terminal may transfer the received NES configuration information to an upper layer of the terminal, and the upper layer may not transfer data to the lower layer until the terminal moves to a new cell.

FIG. 11 is a flowchart showing a method for operating a terminal that is applicable to the present disclosure.

Referring to FIG. 11, the terminal may receive NES configuration information based on an NES operation from a network (S1110). Herein, the NES configuration information may include at least any one of NES barring-related information and NES cell barring information. As an example, the NES barring-related information may be configuration information related to NES barring and is not limited to a specific form.

As another example, the NES cell barring information may indicate whether or not an NES cell is barred. Specifically, in case the NES cell barring information has a first value indicating that the cell is barred, the terminal may not camp on the NES cell based on the NES operation (S1120). That is, the network may prohibit the terminal from camping on the NES cell through the NES cell barring information. On the other hand, in case the NES cell barring information has a second value indicating that the cell is not barred, the terminal may camp on the NES cell based on the NES operation (S1120).

As another example, the terminal may receive a terminal report configuration for activation of the NES operation and report terminal-related information based on the terminal report configuration to the network. After reporting the terminal-related information to the network, the terminal may receive NES configuration information but not be limited thereto.

As an example, the terminal may perform measurement for at least one or more cells based on the terminal report configuration and report the terminal-related information including measurement information to the network. The network may determine, based on the measurement information, whether or not to activate the NES operation. As another example, the terminal may store terminal information based on the terminal report configuration and report the terminal-related information including the terminal information to the network. The network may determine, based on the measurement information, whether or not to activate the NES operation. Herein, the terminal information may include at least any one of terminal location information, moving velocity information and service priority information.

In case the terminal receives NES configuration information from the network, the terminal may perform cell reselection based on a cell reselection parameter that is applied to the terminal for the NES operation, according to the NES configuration information. As an example, the terminal may be any one of an idle mode terminal or an inactive mode terminal but not be limited thereto.

In addition, as an example, the NES configuration information may be transmitted to the terminal through any one of a broadcast message, a short message or a paging message. Herein, the NES configuration information may include at least any one of access control information based on the NES operation and mobility information based on the NES operation, and the terminal may perform the NES operation based on the NES configuration information.

Herein, the access control information based on the NES operation may include information on a cell to which access is not permitted for the NES operation, and the terminal may not perform access to the cell to which access is not permitted. In addition, in case the terminal receives the access control information based on the NES operation, the terminal may receive information on a time where access to a cell is not permitted based on the access control information. In addition, the terminal may perform cell reselection for the NES operation according to the mobility information based on the NES operation.

As another example, the NES configuration information may include 1-bit information indicating whether or not to activate the NES operation, and if the 1-bit information indicates activation of the NES operation, the terminal may perform the NES operation based on NES information that is preconfigured in the terminal. In addition, a lower layer of the terminal may transfer the received NES configuration information to an upper layer of the terminal, and the upper layer may not transfer data to the lower layer until the terminal moves to a new cell.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for operating a terminal in a wireless communication system, the method comprising:
receiving, by the terminal, network energy saving (NES) configuration information based on an NES operation; and
performing the NES operation based on the NES configuration information,
wherein the NES configuration information includes at least one of NES barring-related information and NES cell barring information, and
wherein, based on the NES cell barring information indicating a first value, the terminal does not camp on an NES cell based on the NES operation.

2. The method of claim 1, further comprising:
receiving, by the terminal, a terminal report configuration for activation of the NES operation; and
reporting terminal-related information to the network based on the terminal report configuration,
wherein the terminal receives the NES configuration information after reporting the terminal-related information to the network.

3. The method of claim 1 or claim 2, wherein the terminal performs measurement for at least one cell based on the terminal report configuration and reports the terminal-related information including information on the measurement to the network, and
wherein the network determines, based on the information on the measurement, whether or not to activate the NES operation.

4. The method of claim 1 or claim 2, wherein the terminal stores terminal information based on the terminal report configuration and reports the terminal-related information including the terminal information to the network, and
wherein the network determines, based on the information on the measurement, whether or not to activate the NES operation.

5. The method of claim 1 to claim 4, wherein the terminal information includes at least one of terminal location information, moving velocity information and service priority information, and
wherein the terminal-related information is reported to the network based on a terminal assistance information reporting procedure.

6. The method of claim 1, wherein the terminal performs cell reselection based on a cell reselection parameter that is applied to the terminal for the NES operation according to the NES configuration information.

7. The method of claim 1 to claim 6, wherein the terminal is one of an idle mode terminal or an inactive mode terminal.

8. The method of claim 1, wherein the NES configuration information is transmitted to the terminal through one of a broadcast message, a short message or a paging message.

9. The method of claim 1 to claim 8, wherein the NES configuration information includes at least one of access control information based on the NES operation and mobility information based on the NES operation, and
wherein the NES operation is performed based on the NES configuration information.

10. The method of claim 1 to claim 9, wherein the access control information based on the NES operation includes cell information that does not permit access for the NES operation, and
wherein the terminal does not perform access to a cell that does not permit the access.

11. The method of claim 1 to claim 10, wherein, based on the terminal receiving the access control information based on the NES operation, the terminal receives information on a time where access to a cell is not permitted based on the access control information.

12. The method of claim 1 to claim 9, wherein the terminal performs the cell reselection for the NES operation based on the mobility information based on the NES operation.

13. The method of claim 1 to claim 8, wherein NES configuration information includes 1-bit information indicating whether or not to activate the NES operation, and
wherein, based on the 1-bit information indicating activation of the NES operation, the terminal performs the NES operation based on NES information that is preconfigured in the terminal.

14. The method of claim 1 to claim 13, wherein a lower layer of the terminal transfers the received NES configuration information to an upper layer of the terminal, and
wherein the upper layer does not transfer data to the lower layer until the terminal moves to a new cell.

15. A terminal operating in a wireless communication system, the terminal comprising:
at least one transceiver;
at least one processor; and
at least one memory operably coupled with the at least one processor and storing instructions that instruct, when executed, the at least one processor to perform a specific operation,
wherein the specific operation is configured to:
control the at least one transceiver to enable the terminal to receive network energy saving (NES) configuration information based on an NES operation, and
perform the NES operation based on the NES configuration information,
wherein the NES configuration information includes at least one of NES barring-related information and NES cell barring information, and
wherein, based on the NES cell barring information indicating a first value, the terminal does not camp on an NES cell based on the NES operation.

16. A method for operating a node in a wireless communication system, the method comprising:
transmitting network energy saving (NES) configuration information to a terminal based on a network energy saving (NES) operation; and
performing the NES operation based on the NES configuration information,
wherein the NES configuration information includes at least one of NES barring-related information and NES cell barring information, and
wherein, based on the NES cell barring information indicating a first value, the node does not permit the terminal to camp on an NES cell based on the NES operation.

17. A node operating in a wireless communication system, the node comprising:
at least one transceiver;
at least one processor; and
at least one memory operably coupled with the at least one processor and storing instructions that instruct, when executed, the at least one processor to perform a specific operation,
wherein the specific operation is configured to:
control the at least one transceiver to transmit network energy saving (NES) configuration information to a terminal based on an NES operation, and
perform the NES operation based on the NES configuration information,
wherein the NES configuration information includes at least one of NES barring-related information and NES cell barring information, and
wherein, based on the NES cell barring information indicating a first value, the node does not permit the terminal to camp on an NES cell based on the NES operation.

18. A device comprising:
at least one memory; and
at least one processor functionally coupled with at least one memory,
wherein the at least one processor controls the device to:
receive network energy saving (NES) configuration information based on an NES operation, and
perform the NES operation based on the NES configuration information,
wherein the NES configuration information includes at least one of NES barring-related information and NES cell barring information, and
wherein, based on the NES cell barring information indicating a first value, the terminal does not camp on an NES cell based on the NES operation.

19. A non-transitory computer-readable medium storing at least one instruction, the non-transitory computer-readable medium comprising the at least one instruction that is executable by a processor,
wherein the at least one instruction controls a device to:
receive network energy saving (NES) configuration information based on an NES operation, and
perform the NES operation based on the NES configuration information,
wherein the NES configuration information includes at least one of NES barring-related information and NES cell barring information, and
wherein, based on the NES cell barring information indicating a first value, the terminal does not camp on an NES cell based on the NES operation.
